# EUROPEAN PATENT SPECIFICATION

(11) **EP 1 771 917 B1**
(45) Date of publication and mention of the grant of the patent: **13.06.2012**
(21) Application number: 05754434.8
(22) Date of filing: 26.05.2005
(51) Int. Cl.: H01Q 1/24, H01Q 21/28

(54) **AN ANTENNA HAVING AN ANTENNA TO RADOME RELATION WHICH MINIMIZES USER LOADING EFFECT**
ANTENNE MIT EINER BEZIEHUNG VON ANTENNE ZU RADOM, DIE DEN BENUTZERLASTEFFEKT MINIMIERT
ANTENNE PRESENTANT UN RAPPORT ANTENNE/RADOME QUI REDUIT AU MINIMUM L'EFFET DE CHARGE DE L'UTILISATEUR

(30) Priority: 21.06.2004 US 873870
(43) Date of publication of application: 11.04.2007
(73) Proprietor: Motorola Mobility, Inc., Libertyville, IL 60048 (US)
(72) Inventor: SCARPELLI, Tadd, M., Third Lake, IL 60030 (US); KRENZ, Eric, L., Crystal Lake, IL 60012 (US)
(74) Representative: Openshaw, Paul Malcolm
(86) International application number: PCT/US2005/018709
(87) International publication number: WO 2006/007217

(56) References cited:
- EP-A- 1 324 425
- WO-A-00/67342
- WO-A-03/103173

## Description

### FIELD OF THE INVENTION

The present invention relates in general to an antenna for use with a wireless communication device. More particularly, the present invention relates to an antenna for use in an enclosure, which includes one or more arms, having an electrical length corresponding to an intended frequency band of transmission, where along said length a source of external loading will have a variable effect, where areas of high and low impedance are selectively positioned relative to one or more anticipated points of contact, where a source of external loading will be brought into proximity with the enclosure.

### BACKGROUND OF THE INVENTION

Many factors affect the performance of an antenna including the antenna's own physical dimensions, the proximity of other items including other components of the phone, as well as external elements, such as a user's hand or head. To the extent that the proximally located elements are fixed and known, such as other internal components whose position relative to the antenna does not change, the design can be adjusted to accommodate the other devices. However the more variable elements such as a user's hand are a little more problematic, in so far as their effects may only be selectively present, as well as in a more varied amount.

However, the present inventors have recognized that despite the effects of some nearby elements, which can have a variable effect on the functioning of the antenna, the potential effects can be mitigated by providing a minimum gap between the antenna and the one or more points along the exterior surface of the enclosure that a source of external loading is likely to contact. The effects can be further mitigated by managing the specific portion of the antenna which will come into closest proximity to the anticipated point of approach of the outside influence, where some portions of the antenna may be more or less susceptible to the loading effects from the external source.

Prior art document WO 03/103173 (Japan) such as the prior art corresponding english document EP1511183 describe a portable terminal with an internal antenna positionned considering the interferring user hand.

The various design considerations can be even more challenging to the extent that the antenna is used in a device where there is a desire to shrink the overall dimensions of the device, and correspondingly the enclosure in which the antenna is located. In many instances the potential effects include one or more various tradeoffs that can affect antenna performance in both positive and simultaneously negative ways, which must be considered.

Consequently by managing the particular portion of an antenna that is more predominately exposed to a source of external loading, the amount of gap between the edge of the enclosure and the antenna can be beneficially adjusted, as well as the overall performance of the antenna.

### BRIEF DESCRIPTION OF THE FIGURES

The present invention will be described by way of exemplary embodiments, but not limitations, illustrated in the accompanying drawings in which like references denote similar elements, and in which:
FIG. 1 is a partial perspective exploded view of a handheld communication device including an antenna, in accordance with at least one embodiment of the present invention;
FIG. 2 is a front view of the handheld communication device being held by one's hand;
FIG. 3 is a right side view of the handheld communication device being held by one's hand;
FIG. 4 is a top end view of the handheld device being held by one's hand;
FIG. 5 is a cross sectional bottom end view of the handheld communication device illustrating an antenna within an enclosure at the end of the housing of the communication device, in accordance with at least one embodiment of the present invention;
FIG. 6 is a graph of a standing wave having a wavelength of lambda; and
FIG. 7 is a cross sectional bottom end view of the handheld communication device illustrating an antenna in accordance with at least one or more further embodiment of the present invention.

### DETAILED DESCRIPTION

As required, detailed embodiments of the present invention are disclosed herein, however, it is to be understood that the disclosed embodiments are merely exemplary of the invention, which can be embodied in various forms. Therefore, specific structural and functional details disclosed herein are not to be interpreted as limiting, but merely serve as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

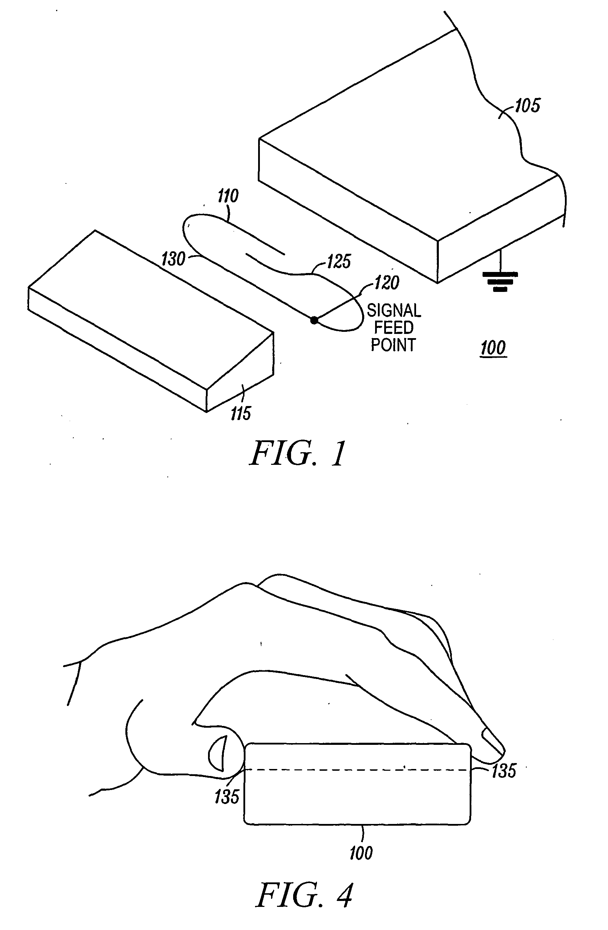

FIG. 1 is a partial perspective exploded view of a handheld communication device 100, such as a cellular telephone, including a ground structure 105 representative of the main body of the handheld communication device 100, an antenna 110, and a radome 115. The antenna 110 includes a signal feed point 120 for receiving signals to be transmitted via the antenna 110, and/or conveying wireless signals detected by the antenna to a reciever (not shown). From the feed point 120, the antenna 110 extends in two directions via a pair of arms. The shorter 125 of the two arms is adapted for transmitting and/or receiving a higher frequency, i.e. shorter wavelength signal. The longer 130 of the two arms is adapted for transmitting and /or receiving a lower frequency, i.e. longer wavelength signal. In the illustrated embodiment, the antenna represents a dual-arm, dual-band monopole antenna, which is driven against the ground structure 105, where the length of each arm generally corresponds to a quarter of the wavelength of the signal frequencies, which the antenna is designed to detect.

The radome 115 forms an enclosure within which the antenna 110 resides. The radome 115, to a limited extent, prevents external originating bodies from encroaching upon the antenna 110. However the encroachment prevention is largely limited only to the external dimensions of the radome 115. In at least one embodiment the radome is formed from a generally non-conductive plastic. In fact, it is generally anticipated that a user's hand will grip the handheld communication device 100 up to or proximate the limits of the radome 115.

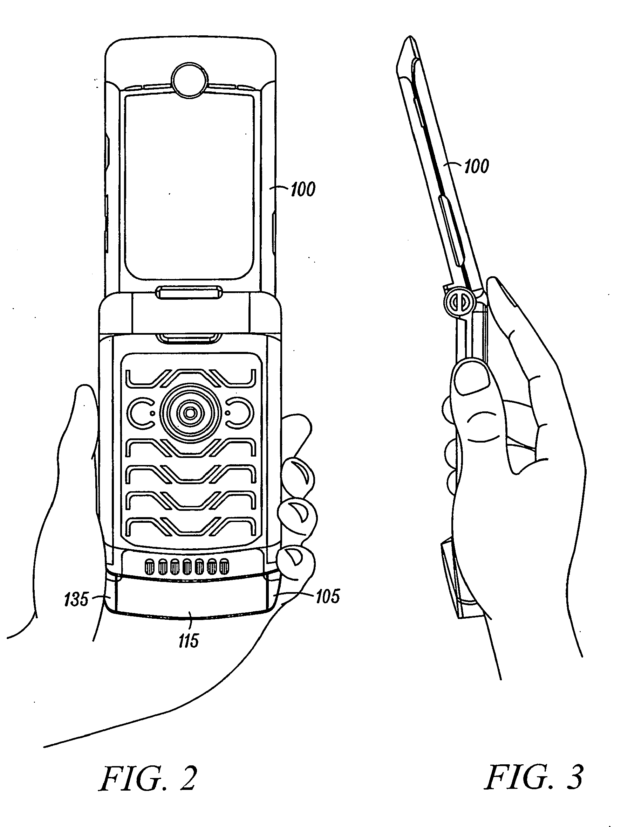

FIGS. 2-4 illustrate several different view of a user's hand holding a handheld communication device 100, in accordance with at least one embodiment of the present invention. More specifically, FIG. 2 illustrates a front view of the handheld communication device being held by one's hand, FIG. 3 illustrates a right side view of the handheld communication device being held by one's hand, and FIG. 4 illustrates a top end view of the handheld device being held by one's hand. FIGS. 2-4, generally illustrate how one would expect a user to hold the handheld communication device 100, while operating the same. In each of the FIGS. it can generally be seen that it can be anticipated that a user operating the device will generally hold the device via the side edges 135 of the device 100. Cupping of the hand tends to pull the rest of the hand away from the back of the device 100. This can be more readily seen in FIGS. 3 and 4.

While the radome 115 to some extent will limit the encroachment of one's hand relative to the antenna 110, given the handheld device's limited overall dimension, some encroachment may be unavoidable. An externally originating body, such as a hand can often provide an electrically coupled source of impedance, which can detrimentally affect the tuning and/or efficiencies of the antenna. Depending upon where the hand or interfering body approaches the antenna, the amount of loading can be affected a varying amount. The amount of the effect can be dependent upon the distance between the interfering body and the antenna, which generally corresponds to the gap between the antenna 110 and the radome 115, as well as the position along the length of the arm of the antenna 110. At different distances along the length of the arm, a standing wave will produce an amplitude of varying intensities.

For a quarter wave antenna the lowest amplitude or lowest impedance is generally seen at the source. The highest amplitude or highest impedance is generally seen at the end of the arm. As a result, an interfering body will often have the greatest affect proximate the end of the arm of a particular antenna. Still further the degree to which the interfering body will affect the particular antenna is often dependent upon the overall length of the antenna, and hence the frequency of signals the antenna is designed to detect. In at least the illustrated embodiment, the higher frequency arms tend to be more susceptible to proximate interfering bodies. Another area of concern includes the area of overlap 140 associated with multiple adjacent arms. In the illustrated embodiment, not only is the area of overlap 140 associated with the end points of a quarter wavelength antenna, but the area of overlap 140 is often specifically tuned to produce beneficial results, in one or more of the arms. Because the overlap area 140 may be especially susceptible, the overlap area is often situated toward the front facing of the handheld communication device, where the hand will not typically be present, or in other words away from the back facing of the phone.

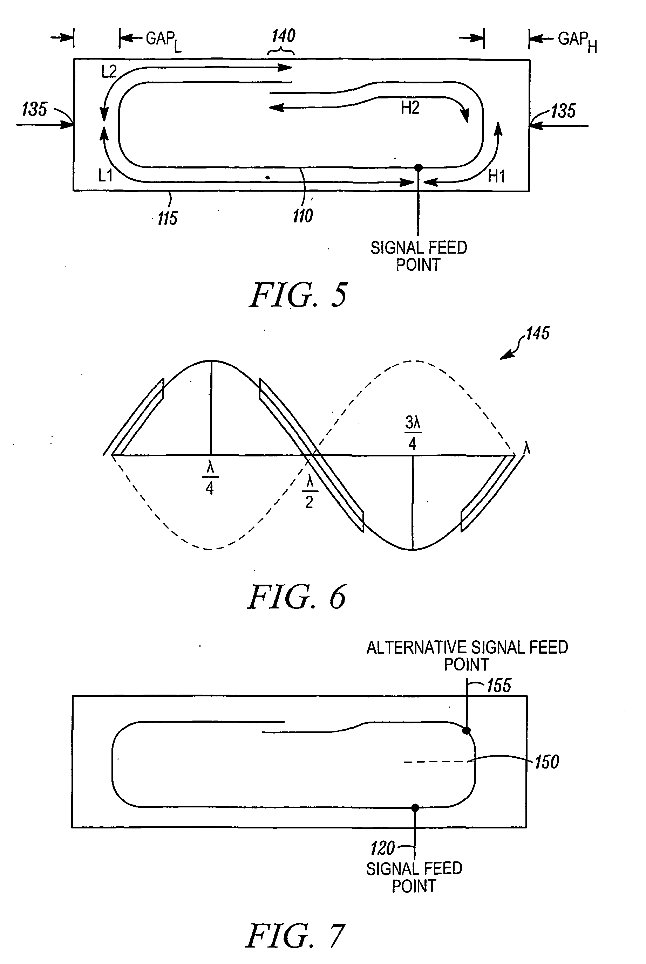

FIG. 6 illustrates an example of a standing wave 145, wherein the corresponding amplitude at any distance along the wavelength between zero and lambda, anticipates the degree of susceptibility of the antenna to a nearby interfering body. It is noted that the illustration shows the amplitude beyond the quarter wavelength. While the present invention has been largely described in connection with quarter wavelength antennas, the beneficial teachings of the present invention are believed to also be applicable to other antennas, which correspond to other than quarter wavelength antennas.

In the illustrated embodiment, the heavy line may correspond to points along the antenna, which might be largely immune to an approaching interfering body given the size of the gap between the anticipated point of contact and the antenna 110 within the radome 115. By adjusting the point along the antenna 110 at which the antenna arm is closest to the anticipated point of contact 135, one may be able to more effectively manage the effects of the interfering body, and in some instances may even be able to comfortably reduce the gap. In the embodiment illustrated in FIG. 5, the point at which the antenna is closest to the anticipated point of contact 135 can be defined by the ratio of L1 to L2, or H1 to H2. Generally the lower the ratio, the less that a proximately located interfering body will affect the antenna arm.

FIG. 7 illustrates a cross sectional bottom end view of the handheld communication device illustrating an antenna in accordance with at least one or more further embodiment of the present invention. In accordance with at least one further embodiment FIG. 7 illustrates the possibility of more than two arms, where a third potential arm, which could be adapted for receiving signals at yet a still further band of frequencies, is illustrated with a dashed line 150. As illustrated, it is possible for the multiple arms to share corresponding lengths of the antenna structure. Furthermore, while it has not been expressly shown, the teaching of the present invention may be beneficially employed in antennas having a single arm.

Still further it may be beneficial to vary the location of the signal feed point, such as the illustrated alternative signal feed point 155. By varying the location of the feed point, it may be possible to associate a most proximate anticipated point of contact that is closer to the point where the signal source is applied to the particular arm, which can often produce beneficial results relative to the particular arm. In some instances, it may be still further desirable to position the feed point at the anticipated point of contact. However, by alternatively positioning the signal feed point at an anticipated most proximate point of contact for one of the arms, while you may be making the situation better for one of the arms, you may be making the situation worse for another arm. However, because the higher frequency shorter arms tend to be more problematic, the overall benefit of associating the feed point of the shorter arm closer to the anticipated most proximate point of contact may outweigh the detriment associated with an alternative arm of the antenna.

While in the illustrated embodiments, the interfering body has largely been associated with a user's body part, such as the hand, one skilled in the art will readily appreciate that other types of interfering bodies could similarly affect the performance of the antenna in a negative way. Generally, potentially interfering bodies include bodies incorporating conductive materials and/or materials having a high dielectric constant.

## Claims

1. An antenna (110), located within an enclosure (115), said antenna (110) including a feed point (120) for receiving a signal source of a signal to be transmitted and/or conveying wireless signals detected by the antenna to a receiver, said antenna (110) further including one or more arms (125, 130), each arm being a wire having a length corresponding to an intended frequency band of transmission, where said length is longer than the length of the enclosure such that in order to fit in the enclosure the one or more arms requires to be bent at two or more points along said length to provide at least a first, second and third extending portion of said length, the first portion extending from the feed point, the second portion extending from the first bend point, the third portion extending from the second bend point in an opposite direction to the first portion, and where along said length a source of external loading including a hand of a user will have a variable effect,
wherein said enclosure (115) includes one or more anticipated points of contact (135), at which the hand of the user is anticipated to grip the enclosure (115), where a source of external loading will be brought into proximity with said enclosure (115 ), and
wherein the bend points of the one or more arms (125, 130) are further constructed and arranged to locate positions along the length of each arm where the antenna is of relatively high impedance at least a predetermined distance from the one or more anticipated points of contact (135) and further away from the one or more anticipated points of contact (135) than positions along the length of each arm where the antenna is of relatively low impedance.

2. An antenna in accordance with claim 1, further including two or more arms, wherein a first one (125) of the arms is associated with a relatively high frequency band of transmission, and a second one (130) of the arms is associated with a relatively low frequency band of transmission.

3. An antenna in accordance with claim 1 or claim 2 where the number of arms is two.

4. An antenna in accordance with claim 3, wherein the feed point (120) is positioned proximate one of the anticipated points of contact (135).

5. An antenna in accordance with claim 1, wherein each arm (125, 130) has a length corresponding to a quarter of the wavelength of the intended frequency band of transmission.

6. An antenna in accordance with claim 5, wherein the endpoint of each arm (125, 130) is associated with a high impedance area.

7. An antenna in accordance with claim 1, wherein the antenna (110) is a monopole antenna.

8. An antenna in accordance with claim 1, wherein the antenna (110) is a dual frequency band antenna.

9. An antenna in accordance with claim 1, wherein a corresponding gap having a predetermined distance is maintained between the most proximal point of the antenna (110) relative to each of the anticipated points of contact (135).

10. An antenna in accordance with claim 1, wherein the source of external loading includes an interfering body providing an electrically coupled source of impedance.

11. An antenna in accordance with claim 10, wherein the interfering body comprises one or more materials including one or more of a conductor, and a material having a high dielectric constant.

12. An antenna in accordance with claim 1, wherein the endpoints of at least two of the arms have an area of overlap (140).

13. An antenna in accordance with claim 12, wherein the area of overlap (140) is located at least a predetermined distance from the one or more anticipated points of contact.

14. An antenna in accordance with claim 1, wherein said antenna (110) is incorporated as part of a hand held wireless communication device (100).

15. An antenna in accordance with claim 1, wherein said wireless communication device (100) is a cellular telephone.

## Patentansprüche

1. Antenne (110), die in einem Gehäuse (115) angeordnet ist, wobei die Antenne (110) einen Signalzuführungspunkt (120) zum Empfangen einer Signalquelle eines zu übertragenden Signals und/oder Übermitteln von Funksignalen, die von der Antenne erkannt werden, an einen Empfänger aufweist, wobei die Antenne (110) weiterhin einen oder mehrere Arme (125, 130) aufweist, wobei jeder Arm ein Draht mit einer Länge ist, die einem vorgesehenen Übertragungsfrequenzband entspricht, wobei die Länge länger als die Länge des Gehäuses ist, so dass zur Einpassung in das Gehäuse der eine oder die mehreren Arme an zwei oder mehr Punkten entlang der Länge gebogen werden muss bzw. müssen, um mindestens einen ersten, zweiten und dritten sich erstreckenden Abschnitt der Länge bereitzustellen, wobei der erste Abschnitt sich von dem Zuführungspunkt erstreckt, der zweite Abschnitt sich von dem ersten Biegepunkt erstreckt und der dritte Abschnitt sich von dem zweiten Biegepunkt in einer entgegengesetzten Richtung zu dem ersten Abschnitt erstreckt, und wobei eine Quelle für externes Laden, einschließlich einer Hand eines Benutzers, entlang der Länge einen variablen Effekt haben wird,
wobei das Gehäuse (115) einen oder mehrere erwartete Kontaktpunkte (135) aufweist, an denen erwartet wird, dass die Hand des Benutzers dort das Gehäuse (115) festhält, wobei eine Quelle für externes Laden in die Nähe des Gehäuses (115) gebracht wird, und
wobei die Biegepunkte des einen oder der mehreren Arme (125, 130) weiterhin so konstruiert und eingerichtet sind, dass sie Positionen entlang der Länge jedes Arms, an denen die Antenne eine verhältnismäßig hohe Impedanz hat, in mindestens einem vorher festgelegten Abstand von dem einen oder den mehreren erwarteten Kontaktpunkten (135) und weiter entfernt von dem einen oder den mehreren erwarteten Kontaktpunkten (135) als Positionen entlang der Länge jedes Arms, an denen die Antenne eine verhältnismäßig niedrige Impedanz hat, lokalisieren.

2. Antenne nach Anspruch 1, die weiterhin zwei oder mehr Arme aufweist, wobei ein erster (125) der Arme mit einem verhältnismäßig hohen Übertragungsfrequenzband in Zusammenhang steht und ein zweiter (130) der Arme mit einem verhältnismäßig niedrigen Übertragungsfrequenzband in Zusammenhang steht.

3. Antenne nach Anspruch 1 oder 2, wobei die Anzahl der Arme zwei ist.

4. Antenne nach Anspruch 3, wobei der Zuführungspunkt (120) nahe eines der erwarteten Kontaktpunkte (135) positioniert ist.

5. Antenne nach Anspruch 1, wobei jeder Arm (125, 130) eine Länge hat, die einem Viertel der Wellenlänge des vorgesehenen Übertragungsfrequenzbands entspricht.

6. Antenne nach Anspruch 5, wobei der Endpunkt jedes Arms (125, 130) mit einem Bereich mit hoher Impedanz in Zusammenhang steht.

7. Antenne nach Anspruch 1, wobei die Antenne (110) eine Monopolantenne ist.

8. Antenne nach Anspruch 1, wobei die Antenne (110) eine Antenne für zwei Frequenzbänder ist.

9. Antenne nach Anspruch 1, wobei eine entsprechende Lücke mit einem vorher festgelegten Abstand zwischen dem am nächsten gelegenen Punkt der Antenne (110) in Bezug auf jeden der erwarteten Kontaktpunkte (135) aufrechterhalten wird.

10. Antenne nach Anspruch 1, wobei die Quelle für externes Laden einen Störkörper aufweist, der eine elektrisch gekoppelte Impedanzquelle bereitstellt.

11. Antenne nach Anspruch 10, wobei der Störkörper ein oder mehrere Materialien umfasst, die einen oder mehrere eines Leiters und eines Materials mit einer hohen Dielektrizitätskonstante beinhalten.

12. Antenne nach Anspruch 1, wobei die Endpunkte von mindestens zwei der Arme einen Überlappungsbereich (140) haben.

13. Antenne nach Anspruch 12, wobei der Überlappungsbereich (140) in mindestens einem vorher festgelegten Abstand von dem einen oder mehreren erwarteten Kontaktpunkten angeordnet ist.

14. Antenne nach Anspruch 1, wobei die Antenne (110) als Teil eines tragbaren Funkkommunikationsgeräts (100) integriert ist.

15. Antenne nach Anspruch 1, wobei das Funkkommunikationsgerät (100) ein Mobiltelefon ist.

## Revendications

1. Antenne (110), située à l'intérieur d'une enceinte (115), ladite antenne (110) comprenant un point d'alimentation (120) pour la réception d'une source de signal d'un signal à transmettre et/ou le transport de signaux sans fil détectés par l'antenne vers un récepteur, ladite antenne (110) comprenant en outre une ou plusieurs branches (125, 130), chaque branche étant un fil ayant une longueur correspondant à une bande de fréquences de transmission prévue, ladite longueur étant plus longue que la longueur de l'enceinte de telle sorte que, afin de s'adapter dans l'enceinte, la ou les branches nécessitent d'être courbés au niveau de deux points ou plus le long de ladite longueur pour fournir au moins des première, deuxième et troisième parties d'extension de ladite longueur, la première partie s'étendant à partir du point d'alimentation, la deuxième partie s'étendant à partir du premier point de courbure, la troisième partie s'étendant à partir du deuxième point de courbure dans une direction opposée à la première partie, et où, le long de ladite longueur, une source de charge externe comprenant une main d'un utilisateur aura un effet variable,
ladite enceinte (115) comprenant un ou plusieurs points de contact anticipés (135), au niveau desquels il est anticipé que la main de l'utilisateur saisisse l'enceinte (115), où une source de charge externe sera amenée à proximité de ladite enceinte (115), et
dans laquelle les points de courbure de la ou des branches (125, 130) sont en outre construits et agencés pour localiser des positions le long de la longueur de chaque branche où l'antenne est d'une impédance relativement élevée à au moins une distance prédéterminée du ou des points de contact anticipés (135) et plus éloignées du ou des points de contact anticipés (135) que des positions le long de la longueur de chaque branche où l'antenne est d'une impédance relativement faible.

2. Antenne selon la revendication 1, comprenant en outre deux branches ou plus, une première branche (125) parmi les branches étant associée à une bande de fréquences de transmission relativement élevée, et une seconde branche (130) parmi les branches étant associée à une bande de fréquences de transmission relativement faible.

3. Antenne selon la revendication 1 ou la revendication 2, dans laquelle le nombre de branches est de deux.

4. Antenne selon la revendication 3, dans laquelle le point d'alimentation (120) est positionné à proximité de l'un des points de contact anticipés (135).

5. Antenne selon la revendication 1, dans laquelle chaque branche (125, 130) a une longueur correspondant à un quart de la longueur d'onde de la bande de fréquences de transmission prévue.

6. Antenne selon la revendication 5, dans laquelle le point d'extrémité de chaque branche (125, 130) est associé à une zone d'impédance élevée.

7. Antenne selon la revendication 1, dans laquelle l'antenne (110) est une antenne unipolaire.

8. Antenne selon la revendication 1, dans laquelle l'antenne (110) est une antenne à double bande de fréquences.

9. Antenne selon la revendication 1, dans laquelle un espace correspondant ayant une distance prédéterminée est maintenu entre le point le plus proximal de l'antenne (110) par rapport à chacun des points de contact anticipés (135).

10. Antenne selon la revendication 1, dans laquelle la source de charge externe comprend un corps brouilleur fournissant une source d'impédance couplée électriquement.

11. Antenne selon la revendication 10, dans laquelle le corps brouilleur comprend un ou plusieurs matériaux comprenant un ou plusieurs d'un conducteur et d'un matériau ayant une constante diélectrique élevée.

12. Antenne selon la revendication 1, dans laquelle les points d'extrémité d'au moins deux des branches ont une région de chevauchement (140).

13. Antenne selon la revendication 12, dans laquelle la zone de chevauchement (140) est située à au moins une distance prédéterminée du ou des points de contact anticipés.

14. Antenne selon la revendication 1, dans laquelle ladite antenne (110) est incorporée en tant que partie d'un dispositif de communication sans fil portatif (100).

15. Antenne selon la revendication 1, dans laquelle ledit dispositif de communication sans fil (100) est un téléphone cellulaire.
